# EUROPEAN PATENT APPLICATION

(11) **EP 4 434 410 A1**
(43) Date of publication of application: **25.09.2024**
(21) Application number: 22894250.4
(22) Date of filing: 23.06.2022
(51) Int. Cl.: A47J 27/00, A47J 36/00

(54) **COOKING DEVICE**

(30) Priority: 17.11.2021 CN 202122828988 U; 01.12.2021 CN 202123039938 U
(71) Applicant: Zhuhai Unicook Technology Co., Ltd., Zhuhai, Guangdong 519000 (CN)
(72) Inventor: WANG, Feng, Zhuhai, Guangdong 519000 (CN); LI, Dongxing, Zhuhai, Guangdong 519000 (CN); HUANG, Zhonglin, Zhuhai, Guangdong 519000 (CN); XIAO, Qiang, Zhuhai, Guangdong 519000 (CN); CAO, Xiaolin, Zhuhai, Guangdong 519000 (CN); XIE, Junfeng, Zhuhai, Guangdong 519000 (CN)
(74) Representative: Inchingalo, Simona
(86) International application number: PCT/CN2022/100802
(87) International publication number: WO 2023/087707

(57) **Abstract**

Disclosed in the present invention is a cooking device. The cooking device includes: a base; a cookware vessel rotatably arranged in the base; and at least one temperature measuring assembly arranged on the base, wherein the at least one temperature measuring assembly includes a first temperature measuring assembly, and the first temperature measuring assembly is arranged opposite an ingredient area of the cookware vessel. When the cooking device is in a cooking position, an area where an ingredient in the cookware vessel makes contact with the cookware vessel is the ingredient area. Therefore, a temperature difference between a measuring result and ingredient may be reduced, such that accuracy and stability of temperature measurement may be improved, and cooking quality may be improved.

## Description

### Cross-Reference to Related Application

The present invention claims the priority of Chinese Patent Application No. 202122828988.9, filed with the China National Intellectual Property Administration on November 17, 2021 and entitled "Cooking device", and the priority of Chinese Patent Application No. 202123039938.9, filed with the China National Intellectual Property Administration on December 01, 2021 and entitled "Cooking device".

### Technical Field

The present invention relates to the technical field of kitchen devices, and particularly relates to a cooking device.

### Background

A current cooking device, such as an automatic cooker, typically has a cookware vessel rotatable during cooking to improve the cooking quality of ingredient, and a temperature sensor is arranged on the rotating cookware vessel for temperature measurement. The temperature sensor normally rotates with the cookware vessel, whereas the ingredient is always at a lower point of a cooking station of the cookware vessel due to gravity in reality and does not follow the rotation of the cookware vessel. Therefore, when the temperature sensor rotates with the cookware vessel, it does not reflect in real time the local temperature of the cookware vessel where the ingredient is actually heated, resulting in inaccurate temperature measurement. In the prior art, a solution that the temperature sensor is fixed on a rack and does not rotate with the cookware vessel is available, but since the position of the cookware vessel measured by the temperature sensor does not often correspond to the local position of the cookware vessel that heats up the ingredient, inaccurate temperature measurement also exists.

### Summary

Some embodiments of the present invention provide a cooking device. A temperature difference between a measuring result and ingredient may be reduced, such that accuracy and stability of temperature measurement may be improved, and cooking quality may be improved.

An embodiment of the present invention provides a cooking device. The cooking device includes: a base; a cookware vessel, the cookware vessel is rotatably arranged in the base; and at least one temperature measuring assembly, the at least one temperature measuring assembly is arranged on the base, where the at least one temperature measuring assembly includes a first temperature measuring assembly, and the first temperature measuring assembly is arranged opposite an ingredient area of the cookware vessel. When the cooking device is in a cooking position, an area where ingredient in the cookware vessel makes contact with the cookware vessel is the ingredient area.

In an embodiment, the base includes: a housing and a heating assembly arranged in the housing, where the heating assembly is located between the housing and the cookware vessel and configured for heating the cookware vessel; where the heating assembly includes at least one coil panel, and the at least one coil panel includes an annular structure and/or an arc-shaped structure.

In an embodiment, the temperature measuring assembly is arranged opposite a central area of the heating assembly; and/or the temperature measuring assembly is arranged opposite a higher temperature area of the cookware vessel, and when the cooking device is in the cooking position, an area of the cookware vessel opposite the heating assembly during rotation relative to the housing is the higher temperature area.

In an embodiment, at least one part and at least another part of the heating assembly are located at two sides of an axis of the cookware vessel respectively; and the heating assembly has different heights in an axial direction of the cookware vessel along a circumferential direction of the cookware vessel.

In an embodiment, the heating assembly is of an annular shape and sleeves an outside of the cookware vessel, and a contour shape of the heating assembly matches a contour shape of the cookware vessel.

In an embodiment, the heating assembly is obliquely arranged relative to the axis of the cookware vessel; and an end of the heating assembly away from a mouth of the cookware vessel extends to a bottom area or a bottom edge of the cookware vessel.

In an embodiment, an included angle is formed between an axis of the heating assembly and the axis of the cookware vessel, and the included angle is 10°-45°.

In an embodiment, each coil panel of the at least one coil panel is provided with a plurality of first heat dissipation holes arranged at intervals along a circumferential direction of the coil panel; an extending direction of each first heat dissipation hole of the plurality of the first heat dissipation holes is perpendicular to a winding direction of the coil panel; and at least two winding layers of each coil panel of the at least one coil panel are provided.

In an embodiment, the cooking device further includes: a first bracket, where the first bracket is arranged on an outer side of the heating assembly, and the first bracket is provided with at least one magnet; the first bracket is of an annular shape and is arranged coaxial with the heating assembly, and a contour shape of the first bracket matches the contour shape of the heating assembly; and when a plurality of magnets are provided, the plurality of magnets are arranged at intervals along a circumferential direction of the first bracket.

In an embodiment, an outer wall of the cookware vessel is provided with an infrared radiation coating, and the infrared radiation coating at least covers a measuring area of the cookware vessel; and an area where the cookware vessel is irradiated by the temperature measuring assembly when the cooking device is in the cooking position is set as the measuring area.

In an embodiment, the housing is provided with a measuring port; the temperature measuring assembly penetrates the measuring port, and the temperature measuring assembly is detachably connected to the housing; and the temperature measuring assembly includes: a magnetic shielding ring, where the magnetic shielding ring is inserted in the measuring port and connected to the housing; and an infrared temperature measuring sensor that is detachably connected to the housing, where the infrared temperature measuring sensor includes a measuring window, and the measuring window is located in the magnetic shielding ring.

In an embodiment, the magnetic shielding ring includes a first end surface and a second end surface that are oppositely arranged, the second end surface is located outside the housing, an intersection of a radiation range of the temperature measuring assembly and a plane where the first end surface is located is a first area, and the first area is located in an opening of the first end surface.

A cooking device provided in an embodiment of the present invention includes a base, a cookware vessel and at least one temperature measuring assembly. The cookware vessel is rotatably arranged in the base, and at least one the temperature measuring assembly is arranged on the base, such that during the process when the cookware vessel rotates relative to the base, a position of the temperature measuring assembly is fixed, then temperature measuring stability of the temperature measuring assembly is improved, and service life of the temperature measuring assembly is prolonged.

At least one temperature measuring assembly includes a first temperature measuring assembly arranged opposite the ingredient area of the cookware vessel. When the cooking device is in the cooking position, the area where the ingredient in the cookware vessel makes contact with the cookware vessel is the ingredient area, such that the temperature difference between the measuring result of the first temperature measuring assembly and the ingredient is small, and accuracy of temperature measurement is improved.

The above description is merely an overview of the technical solutions of the present invention. In order to more clearly understand the technical means of the present invention, the present invention is able to be implemented according to the contents of the specification, and in order to make the above and other objects, features and advantages of the present invention more obvious and comprehensible, specific embodiments of the present invention are particularly given below.

### Brief Description of the Drawings

Various other advantages and benefits will become apparent to those of ordinary skill in the art through reading the following detailed description of the preferred embodiments. The drawings are for purposes of illustrating preferred embodiments merely and are not considered to limit the present invention. In all of the drawings, identical reference numerals are used to represent identical components. In the figures:
Fig. 1 is a partial sectional view of a cooking device provided in a first embodiment of the present invention;
Fig. 2 is a schematic structural diagram of a part of a cooking device provided in a first embodiment of the present invention;
Fig. 3 is a cooking temperature profile of a cookware vessel in the embodiment shown in Fig. 2;
Fig. 4 is a schematic structural diagram of a part of a cooking device provided in a second embodiment of the present invention;
Fig. 5 is a cooking temperature profile of a cookware vessel in the embodiment shown in Fig. 4;
Fig. 6 is a partial sectional view of a cooking device provided in a second embodiment of the present invention;
Fig. 7 is a partial sectional view of a cooking device provided in a third embodiment of the present invention;
Fig. 8 is a sectional view of a position of the embodiment shown in Fig. 1;
Fig. 9 is an exploded sectional view of an infrared temperature measuring assembly of the embodiment shown in Fig. 8;
Fig. 10 is an enlarged schematic diagram at part A of the embodiment shown in Fig. 1;
Fig. 11 is a sectional view of an infrared temperature measuring assembly provided in an embodiment of the present invention;
Fig. 12 is a schematic assembly diagram of the embodiment shown in Fig. 11;
Fig. 13 is a schematic size diagram of the embodiment shown in Fig. 10;
Fig. 14 is an exploded structural view of a part of a cooking device provided a third embodiment of the present invention; and
Fig. 15 is a cooking temperature profile of a cookware vessel in the embodiment shown in Fig. 14.

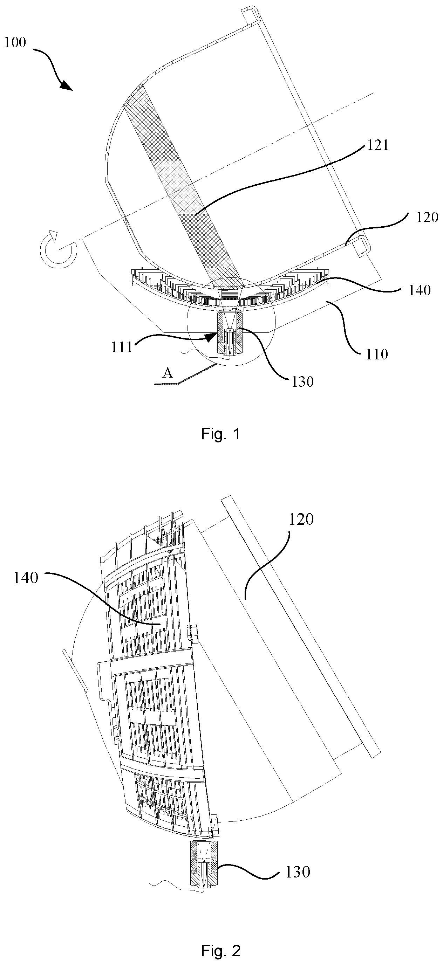

Corresponding relations between the reference numerals and component names in Figs. 1-13 are as follows:
100. cooking device; 110. housing; 111. measuring port; 120. cookware vessel; 121. infrared radiation coating; 122. measuring area; 123. higher temperature area; 124. lower temperature zone; 125. higher temperature zone; 130. temperature measuring assembly; 131. measuring window; 132. magnetic shielding ring; 133. infrared temperature measuring sensor; 1331. upper end surface; 1332. lower end surface; 134. mounting base; 135. first end surface; 136. second end surface; 137. first temperature measuring assembly; 138. second temperature measuring assembly a; 139. second temperature measuring assembly b; 140. heating assembly; 141. coil panel; 142. light transmission area; 21. first heat dissipation hole; 3. first bracket; 31. magnet; 4. second bracket; and 41. second heat dissipation hole.

### Detailed Description of the Embodiments

To more clearly understand the above objectives, features, and advantages of the present invention, the present invention will be further described in detail below in conjunction with the accompanying drawings and the specific implementation modes. It is to be noted that the embodiments in the present invention and features in the embodiments is able to be combined without conflicts.

In the following description, numerous specific details are set forth in order to provide a thorough understanding of the present invention. However, the present invention may be implemented otherwise than as specifically described herein. Accordingly, the scope of protection of the present invention is not limited to the specific embodiments disclosed below.

A cooking device 100 provided according to some embodiments of the present invention is described below with reference to Figs. 1-13. The cooking device 100 is able to be an intelligent cooking device or other devices satisfying requirements.

In cooking devices in the related art, such as an automatic cooker, a temperature sensor is typically arranged on a rotating cookware vessel to measure a temperature of the rotating cookware vessel, and then a temperature of ingredient in the cookware vessel is estimated, so as to implement temperature control and improve cooking quality of the ingredient. Typically, the temperature sensor is arranged on the cookware vessel and rotates with the cookware vessel. However, when the cooking device is in a cooking position, the cookware vessel rotates, and most of the ingredient in the cookware vessel fall under the action of gravity and are located at the bottom of the cookware vessel in the cooking position for a long time, that is to say, there is no ingredient or only a small amount of ingredient attached to the top of the cookware vessel in the cooking position. In a case that the cookware vessel rotates until a part of the cookware vessel where the temperature sensor is mounted is located at the top of the cookware vessel in the cooking position, a distance between the temperature sensor and the ingredient is far, and the temperature of the ingredient or a local temperature of the cookware vessel which really heats the ingredient cannot be accurately reflected, such that overall control accuracy of the temperature of the cooking device is influenced, and the cooking quality of the ingredient is influenced.

In view of this, as shown in Figs. 1 and 2, an embodiment of the present invention provides a cooking device 100. The cooking device including a base, a cookware vessel 120 and at least one temperature measuring assembly 130. The cookware vessel 120 is rotatably arranged in the base. In an embodiment, when the cooking device 100 is in a cooking position, the cookware vessel 120 is rotatable relative to the base, so as to uniformly heat ingredient. At least one temperature measuring assembly 130 is arranged on the base. At least one temperature measuring assembly 130 includes a first temperature measuring assembly 137, and the first temperature measuring assembly 137 is arranged opposite the cookware vessel 120, such that a temperature of the ingredient in the cookware vessel 120 is measured. That is to say, in the cooking device 100 provided in the embodiment of the present invention, the temperature measuring assembly 130 is not arranged on the cookware vessel 120, but is arranged on the base. When the cookware vessel 120 rotates relative to the base, a position of the temperature measuring assembly 130 is fixed, which is beneficial to improvement in stability of temperature measurement of the temperature measuring assembly 130, and the service life of the temperature measuring assembly 130 may be prolonged.

In an embodiment, the first temperature measuring assembly 137 is arranged opposite an ingredient area of the cookware vessel 120. When the cooking device 100 is in a cooking position, an area where ingredient in the cookware vessel 120 makes contact with the cookware vessel 120 is a ingredient area. In an embodiment, in a cooking process, most of the ingredient in the cookware vessel 120 falls under the action of gravity and is located at the bottom of the cookware vessel 120 in the cooking position for a long time. In this case, the ingredient area of the cookware vessel 120 can be understood as an area near the bottom of the cookware vessel 120 in the cooking position, in which the ingredient makes contact with the cookware vessel 120. That is to say, during rotation of the cookware vessel 120, the ingredient area of the cookware vessel 120 is not fixed relative to the cookware vessel 120, but mainly refers to an area where the ingredient makes contact with the cookware vessel 120, that is, a bottom area of the cookware vessel 120 in a rotating position. Therefore, by arranging the first temperature measuring assembly 137 opposite the ingredient area of the cookware vessel 120, a distance between the first temperature measuring assembly 137 and the ingredient in the cookware vessel 120 is short, and a temperature difference between a measuring result of the first temperature measuring assembly 137 and the ingredient is small, such that accuracy of temperature measurement of the ingredient by the first temperature measuring assembly 137 may be improved, and cooking quality of the ingredient may be improved.

Specifically, one, two, three or more temperature measuring assemblies 130 may be provided. Different numbers of the temperature measuring assemblies 130 may satisfy requirements of different temperature measuring accuracy, such that an application range of the product is expanded. It can be understood that one, two or more first temperature measuring assemblies 137 may be provided, so as to further improve the temperature measuring accuracy of the temperature measuring assemblies 130.

In the above embodiment, as shown in Figs. 1 and 2, the base includes a housing 110 and a heating assembly 140 arranged in the housing 110. The heating assembly 140 is arranged in the housing 110. It can be understood that the cookware vessel 120 is also arranged in the housing 110 and is rotatable relative to the housing 110. The housing 110 is a supporting housing for the cookware vessel 120 and the heating assembly 140, and mainly protects the cookware vessel 120 and the heating assembly 140. The heating assembly 140 is located between the housing 110 and the cookware vessel 120 and configured for heating the cookware vessel 120. The temperature measuring assembly 130 is arranged on the base, may also be arranged on the heating assembly 140. In an embodiment, the temperature measuring assembly 130 is arranged on a support of the heating assembly 140. Alternatively, when other components are arranged in the housing 110, and the temperature measuring assembly 130 is arranged on the other components, as long as the above functions is able to be implemented.

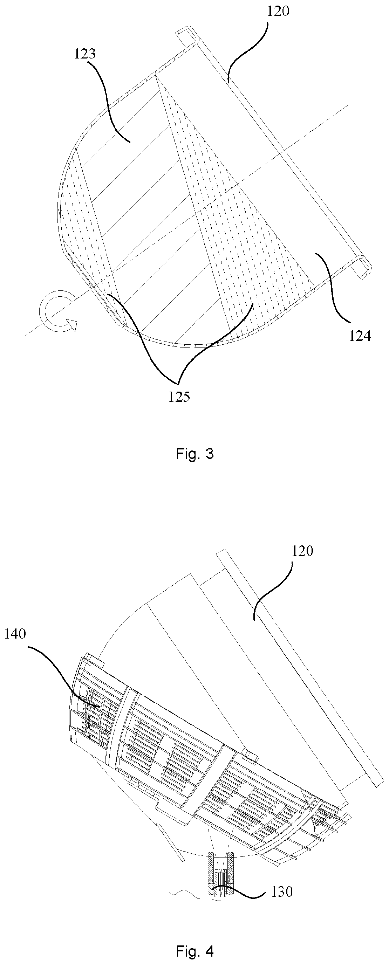

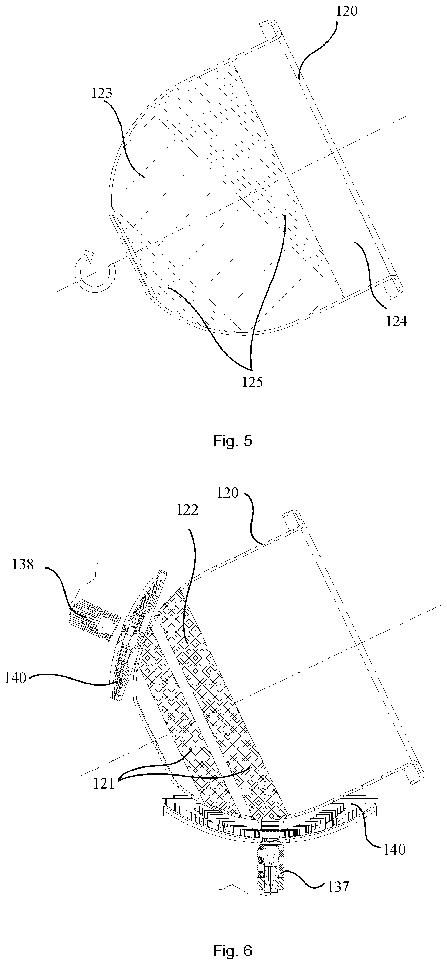

In an embodiment, the heating assembly 140 includes at least one coil panel 141, and at least one coil panel 141 includes an annular structure and/or an arc-shaped structure. As shown in Figs. 2 and 4, at least one coil panel 141 of the annular structure is arranged around a periphery of the cookware vessel 120. In an embodiment, at least one coil panel 141 of the annular structure may be a three-dimensional coil panel, and the three-dimensional coil panel is arranged around the periphery of the cookware vessel 120 as an integral structure. As shown in Figs. 1 and 6, the coil panel 141 of the arc-shaped structure may be distributed on a partial periphery of the cookware vessel 120, or a plurality of coil panels 141 of the arc-shaped structure may be arranged around the periphery of the cookware vessel 120 together. Different numbers of the coil panels 141 may satisfy requirements of different structures, different mounting positions and different heating efficiencies of the coil panels 141, such that the application range of the product is expanded.

It can be understood that the coil panel 141 of the heating assembly 140 includes one of the annular structure and the arc-shaped structure, and alternatively, the coil panel 141 of the heating assembly 140 includes both of the annular structure and the arc-shaped structure. In any of the above cases, one or at least two coil panels 141 of the annular structure may be provided, and one or at least two coil panels 141 of the arc-shaped structure may be provided.

In some embodiments provided in the present invention, as shown in Figs. 1, 6, 8 and 9, the temperature measuring assembly 130 is arranged opposite a central area of the heating assembly 140. In an embodiment, the temperature measuring assembly 130 is an infrared temperature measuring assembly, and a light transmission area 142 is arranged in the central area of the heating assembly 140. In this way, the infrared temperature measuring assembly may obtain infrared light emitted from the cookware vessel 120 through the light transmission area 142 in the central area of the heating assembly 140, such that the temperature of the ingredient area in the cookware vessel 120 may be measured, and the accuracy and reliability of measurement may be improved.

Specifically, the light transmission area 142 is a hollow structure or a transparent member, such as the transparent member is a light transmission plate, such that measurement light of the temperature measuring assembly 130 is able to pass through the light transmission area 142 at the central area of the heating assembly 140 to measure the temperature of the cookware vessel 120.

In an embodiment, the heating assembly 140 is configured to heat the cookware vessel 120 typically. When the cookware vessel 120 is in the cooking position, the central area of the heating assembly 140 is typically located at the central area of the bottom of the cookware vessel 120. That is to say, the central area of the heating assembly 140 is typically opposite the ingredient area of the cookware vessel 120. Therefore, by arranging the temperature measuring assembly 130 opposite the central area of the heating assembly 140, the temperature measuring assembly 130 may quickly, accurately and reliably measure the temperature of the ingredient, which is beneficial to improvement in the cooking quality of the ingredient.

In some embodiments provided in the present invention, as shown in Figs. 3, 4 and 5, the temperature measuring assembly 130 is arranged opposite a higher temperature area 123 of the cookware vessel 120. When the cooking device is in the cooking position, an area of the cookware vessel 120 opposite the heating assembly 140 during rotation relative to the housing 110 is the higher temperature area 123. It can be understood that typically, the cookware vessel 120 includes a higher temperature area 123, a higher temperature zone 125 and a lower temperature zone 124. When the cooking device 100 is in the cooking position, the higher temperature area 123 is arranged opposite the heating assembly 140 during rotation of the cookware vessel 120 relative to the housing 110. The higher temperature area 123 has a highest heating temperature, and the higher temperature area 123 is a concentrated heating area. The higher temperature zone 125 is adjacent to the higher temperature area 123, the higher temperature zone 125 has a higher heating temperature and serves as an auxiliary heating area. The lower temperature zone 124 is located on the side of the higher temperature zone 125 that ia away from the higher temperature area 123. The lower temperature zone 124 typically has a lower temperature and does not heat the ingredient. It can be understood that due to different structures and positions of the heating assembly 140, one higher temperature zone 125 is arranged between the higher temperature area 123 and the low temperature zone 124. Alternatively, as shown in Figs. 3 and 5, two higher temperature zones 125 are arranged on two sides of the higher temperature area 123, and one of the higher temperature zones 125 is located between the higher temperature area 123 and the lower temperature zone 124. When the cooking device 100 is in the cooking position, the probability that the ingredient area overlaps the higher temperature area 123 is typically high.

In other words, the higher temperature area 123 of the cookware vessel 120 is not fixed relative to the cookware vessel 120 during rotation of the cookware vessel 120, and mainly refers to an area of the cookware vessel 120 opposite the heating assembly 140. Since the heating assembly 140 is configured to heat the cookware vessel 120, when the cookware vessel 120 is in the cooking position, in order to guarantee desirable cooking efficiency, the ingredient typically makes contact with the higher temperature area 123 of the cookware vessel 120. That is to say, when the cooking device 100 is in the cooking position, the ingredient area typically has a high probability of overlapping the higher temperature area 123. In other words, the heating assembly 140 is arranged at a position so as to make the ingredient area of the cookware vessel 120 is able to located in the higher temperature area 123 of the cookware vessel 120 when the cookware vessel 120 is in the cooking position. Therefore, by arranging the temperature measuring assembly 130 opposite the higher temperature area 123 of the cookware vessel 120, the temperature measuring assembly 130 may quickly, accurately and reliably measure the temperature of the ingredient.

In an embodiment, at least one temperature measuring assembly 130 is provided. When one temperature measuring assembly 130 is provided, the temperature measuring assembly 130 is arranged opposite the central area of the heating assembly 140, and alternatively, the temperature measuring assembly 130 is arranged opposite the higher temperature area 123 of the cookware vessel 120. When at least two temperature measuring assemblies 130 are provided, all of the temperature measuring assemblies 130 are arranged opposite the central area of the heating assembly 140, alternatively, all of the temperature measuring assemblies 130 are arranged opposite the higher temperature area 123 of the cookware vessel 120, and alternatively, some of the temperature measuring assemblies 130 are arranged opposite the central area of the heating assembly 140, and the other temperature measuring assemblies 130 are arranged opposite the higher temperature area 123 of the cookware vessel 120. Different mounting positions of the temperature measuring assembly 130 achieve various mounting modes of the temperature measuring assembly 130 on the premise of guaranteeing the accuracy of temperature measurement, and the application range is wider.

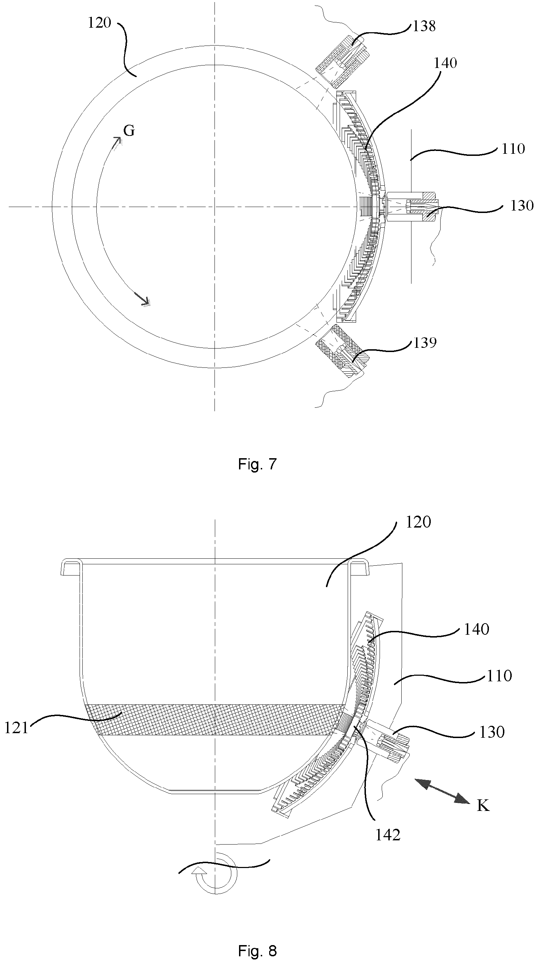

In some embodiments provided in the present invention, as shown in Figs. 6 and 7, the temperature measuring assembly 130 further includes a second temperature measuring assembly distributed at least on one side of the first temperature measuring assembly 137 for assisting the first temperature measuring assembly 137. The first temperature measuring assembly 137 and the second temperature measuring assembly jointly measure a temperature, such that the accuracy and reliability of temperature measurement may be improved. When the cooking device 100 is in the cooking position, the cookware vessel 120 may rotate reciprocally relative to the base in a direction of arrow G in Fig. 7.

In an embodiment, the present invention does not limit the number and distribution mode of the second temperature measuring assembly. One or more second temperature measuring assemblies may be distributed on a same side of the first temperature measuring assembly 137, and alternatively, one or more second temperature measuring assemblies may be distributed on two sides of the first temperature measuring assembly 137. As shown in Fig. 6, one second temperature measuring assembly may be provided, and the second temperature measuring assembly includes a second temperature measuring assembly a 138, the second temperature measuring assembly a 138 and the first temperature measuring assembly 137 are oppositely distributed on two sides of the cookware vessel 120. As shown in Fig. 7, two second temperature measuring assemblies are provided, and the two second temperature measuring assemblies include a second temperature measuring assembly a 138 and a second temperature measuring assembly b 139. The second temperature measuring assembly a 138 and the second temperature measuring assembly b 139 are arranged on two sides of the first temperature measuring assembly 137 respectively.

As shown in Figs. 6, 8 and 9, when the cooking device 100 is in the cooking position, an area of the cookware vessel 120 irradiated by the temperature measuring assembly 130 is a measuring area 122. An outer wall of the cookware vessel 120 is provided with an infrared radiation coating 121. The arrangement of the infrared radiation coating 121 is able to enhance an emissivity of infrared light generated by the cookware vessel 120 in a heating process, and further improve the reliability of measurement by the temperature measuring assembly 130. The infrared radiation coating 121 at least covers the measuring area 122 of the cookware vessel 120, such that the infrared radiation coating 121 is able to be guaranteed to cover the measuring area of the temperature measuring assembly 130 at any rotation angle of the cookware vessel 120, and the reliability and accuracy of measuring by the temperature measuring assembly 130 are able to be further improved. In an embodiment, the infrared radiation coating 121 on the outer wall of the cookware vessel 120 is an infrared radiation coating 121 with high temperature resistance and high hardness, such that it is guaranteed that the emissivity of infrared light with a wavelength of 6 um to 16 um reaches 95% or more. In an embodiment, the infrared radiation coating 121 is a graphene-ceramic composite coating. It can be understood that the infrared radiation coating 121 may also be a coating made of other materials satisfying requirements.

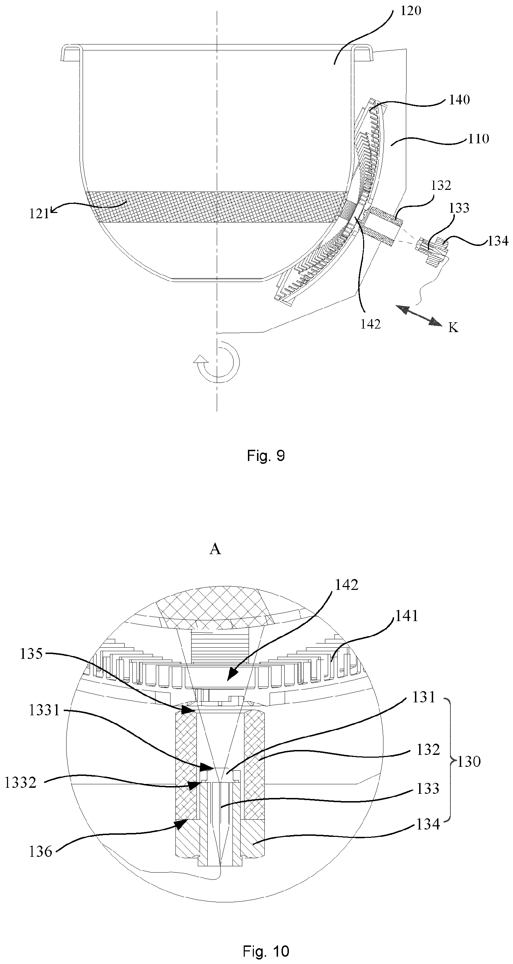

Specifically, as shown in Figs. 8 and 9, the infrared radiation coating 121 is arranged on the entire measuring area 122 of the cookware vessel 120. In an embodiment, when the cookware vessel 120 is in the cooking position, the infrared radiation coating 121 is arranged on an entire area of a circle of the cookware vessel 120 opposite the temperature measuring assembly 130. Alternatively, as shown in Fig. 6, in order to further increase the infrared emissivity, besides the infrared radiation coating 121 is arranged in the measuring area 122, the infrared radiation coating 121 may also be arranged at other positions of the cookware vessel 120. In an embodiment, the infrared radiation coating 121 surrounding the periphery of the cookware vessel 120 is arranged at a portion of the measuring area 122 of the cookware vessel 120 close to the bottom of the cookware vessel.

In some embodiments provided in the present invention, as shown in Figs. 1, 8, 9 and 10, the housing 110 is provided with a measuring port 111. The temperature measuring assembly 130 penetrates the measuring port 111, and the temperature measuring assembly 130 is detachably connected to the housing 110. Such an arrangement facilitates detaching and mounting of the temperature measuring assembly 130 and the housing 110, and the temperature measuring assembly 130 is able to be detached from the housing 110 for replacement, maintenance and cleaning. The replacement, maintenance and cleaning experience of the temperature measuring assembly 130 may be improved, maintenance efficiency is improved, and the service life of the temperature measuring assembly is prolonged.

The temperature measuring assembly 130 includes a measuring window 131. When dust or contamination exists on the measuring window 131, the accuracy of temperature measurement of the temperature measuring assembly 130 is influenced. Therefore, the temperature measuring assembly 130 is detached from the housing 110, then the measuring window 131 of the temperature measuring assembly 130 is cleaned, and the cleaned temperature measuring assembly 130 is mounted on the housing 110 to measure the temperature of the cookware vessel 120, such that the accuracy of the temperature measurement of the temperature measuring assembly 130 is improved.

In an embodiment, the temperature measuring assembly 130 penetrates the measuring port 111 and is detachably connected to the housing 110, such that the temperature measuring assembly 130 is able to be mounted on or detached from the housing 110 from the outside of the housing 110 without opening the housing 110. Operation of detaching or mounting the temperature measuring assembly 130 is simplified, is convenient, and is suitable for popularization and application.

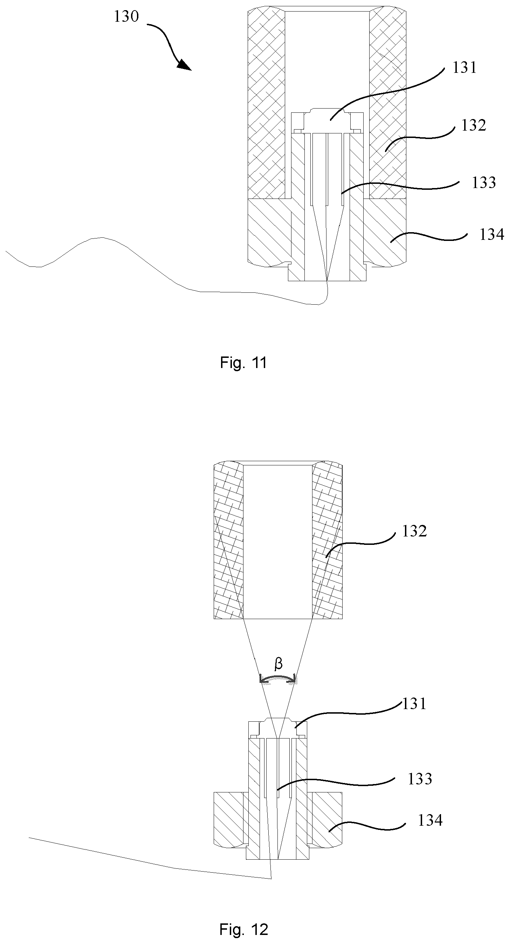

As shown in Figs. 10 and 11, in the above embodiment, the temperature measuring assembly 130 further includes an infrared temperature measuring sensor 133 and a mounting base 134. The infrared temperature measuring sensor 133 is detachably connected to the mounting base 134. The mounting base 134 is configured to be connected to the housing 110. The infrared temperature measuring sensor 133 is connected to the mounting base 134. In other words, the infrared temperature measuring sensor 133 is detachably mounted on the housing 110 by means of the mounting base 134, the structure is simple, and the operation is convenient. The infrared temperature measuring sensor 133 is detachably connected to the mounting base 134, such that after the mounting base 134 with the infrared temperature measuring sensor 133 mounted is detached from the housing 110, the infrared temperature measuring sensor 133 is further detached from the mounting base 134 for maintenance, replacement and cleaning, and the operation is convenient.

The infrared temperature measuring sensor 133 is communicatively connected to a control system of the cooking device 100, and feeds back a measured temperature of the ingredient area at the bottom of the cookware vessel 120 in real time. Specifically, the fixed position of the infrared temperature measuring sensor 133 satisfies the requirement that a temperature at a lowest position of the bottom of the ingredient area of the cookware vessel 120 may be measured when the cookware vessel 120 is in the cooking position.

In the above embodiment, as shown in Figs. 8, 9, 10 and 11, the temperature measuring assembly 130 further includes a magnetic shielding ring 132. The magnetic shielding ring 132 is inserted into the measuring port 111 and connected to the housing 110. The mounting base 134 is detachably connected to the magnetic shielding ring 132 located outside the housing 110, such that the mounting base 134 is detachably connected to the magnetic shielding ring 132. The infrared temperature measuring sensor 133 is detachably connected to the housing 110, and the structure is simple, and the operation is convenient. The infrared temperature measuring sensor 133 includes a measuring window 131. The measuring window 131 is located in the magnetic shielding ring 132, such that the possibility that the measuring window 131 of the infrared temperature measuring sensor 133 is contaminated and influences the measuring accuracy may be reduced. The arrangement of the magnetic shielding ring 132 is able to reduce interference caused by an electromagnetic field generated by the heating assembly 140 to the infrared temperature measuring sensor 133, so as to improve the accuracy and reliability of the temperature measurement of the infrared temperature measuring sensor 133.

Specifically, the detachable connection of the infrared temperature measuring sensor 133, the magnetic shielding ring 132, the mounting base 134, etc. is not limited to a specific connection mode, and includes, but is not limited to, screw connection, magnetic attraction, pin snap connection, etc. In an embodiment, when the infrared temperature measuring sensor 133 needs to be detached from the housing 110, the mounting base 134 is pulled out from the magnetic shielding ring 132 and separated from the housing 110, such that the infrared temperature measuring sensor 133 mounted on the mounting base 134 moves away from the housing 110 and is separated from the housing 110 along with the mounting base 134. Accordingly, maintenance or cleaning of the infrared temperature measuring sensor 133 is facilitated, and the operation is convenient. A direction indicated by arrow K in Figs. 8 and 9 is a direction in which the infrared temperature measuring sensor 133 is detached and mounted.

In an embodiment, as shown in Fig. 7, the cookware vessel 120 is rotated to a suitable position relative to the base, such that the measuring port 111 of the cookware vessel 120 is located in a horizontal direction, facilitating mounting and detaching of the temperature measuring assembly 130.

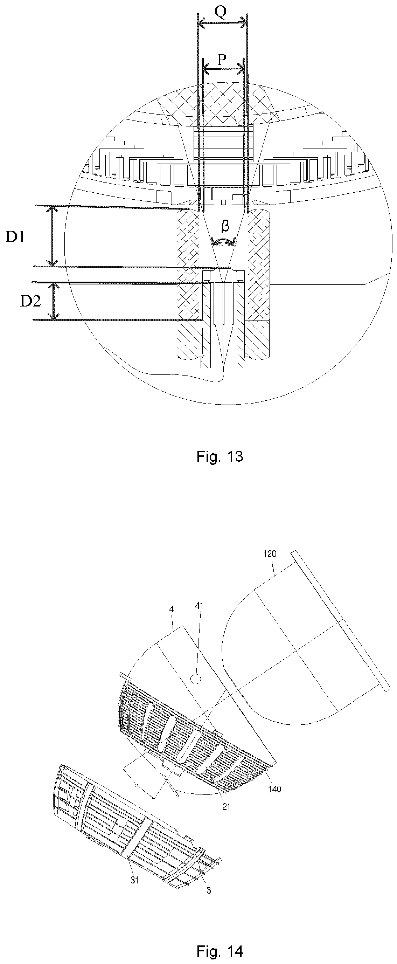

As shown in Figs. 10 and 13, the magnetic shielding ring 132 includes a first end surface 135 and a second end surface 136 which are oppositely arranged. The first end surface 135 is connected to the housing 110, and the second end surface 136 is located outside the housing 110 and detachably connected to the infrared temperature measuring sensor 133. An end surface of the measuring window 131 close to the cookware vessel 120 is an upper end surface 1331. A distance between the upper end surface 1331 and the first end surface 135 is set as D1, and D1 is set to range from 4 mm to 12 mm. An end surface of the measuring window 131 away from the cookware vessel 120 is a lower end surface 1332. A distance between the lower end surface 1332 and the second end surface 136 is set as D2, and D2 is set to range from 4 mm to 12 mm. Such an arrangement is able to guarantee that an electromagnetic field generated by the coil panel does not interfere with the infrared temperature measuring sensor 133, so as to guarantee the accuracy and reliability of the temperature measurement of the infrared temperature measuring sensor 133. In an embodiment, D1 is set as 8 mm, and D2 is set as 8 mm. It can be understood that D1 and D2 may be other values satisfying requirements.

As shown in Figs. 12 and 13, an intersection of a radiation range of the temperature measuring assembly 130 and a plane where the first end surface 135 is located is a first area. The first area is located in an opening of the first end surface 135 of the magnetic shielding ring 132. In a case that an included angle between infrared light emitted from the infrared temperature measuring sensor 133 through the measuring window 131 and a vertical center plane of the infrared temperature measuring sensor 133 is set to be β, a distance between intersection points of two sides of the included angle β and the first end surface 135 of the magnetic shielding ring 132 is P, an opening diameter of the first end surface 135 of the magnetic shielding ring 132 is Q, and P ≤ Q, it is indicated that the first area is located in the opening of the first end surface 135. In this way, it is able to be guaranteed that the magnetic shielding ring 132 does not block the radiation range of the measuring window 131, such that the reliability and accuracy of the temperature measuring assembly 130 are able to be further guaranteed.

As shown in Fig. 14, the heating assembly 140 is arranged on an outer side of the cookware vessel 120. At least one part and at least another part of the heating assembly 140 are located at two sides of an axis of the cookware vessel 120 respectively. The heating assembly 140 has different heights in an axial direction of the cookware vessel 120 along a circumferential direction of the cookware vessel 120. The cooking device further includes a base, and the cookware vessel 120 is rotatably arranged on the base by means of a rotating shaft, so as to implement rotation heating of the cookware vessel 120.

In the cooking device provided in the embodiment of the present invention, at least one part and at least another part of the heating assembly 140 are located at the two sides of the axis of the cookware vessel 120 respectively, and the heating assembly 140 has different heights in the axial direction of the cookware vessel 120 in the circumferential direction of the cookware vessel 120. Therefore, when the cookware vessel 120 rotates to be heated, the heating area formed on the cookware vessel 120 is not only formed in an area corresponding to the heating assembly 140, but also in areas corresponding to an upper side and a lower side of the heating assembly 140, such that a coverage height of the heating area in the axial direction of the cookware vessel 120 is increased, the heating areas are dispersed, the heating uniformity of the cookware vessel 120 is improved, and the cooking effect of dishes is enhanced. Moreover, no heat concentration occurs on the cookware vessel 120, then a local high temperature is not generated, a non-stick coating on the surface of the cookware vessel 120 is prevented from falling off, and deformation of the cookware vessel 120 caused by local thermal stress is prevented, such that the service life of the cookware vessel 120 is prolonged. Furthermore, conditions are provided for accurately measuring the temperature of the cookware vessel and controlling the temperature of the cookware vessel.

In the embodiment of the present invention, with reference to Fig. 14, the heating assembly 140 is of an annular shape and sleeves an outside of the cookware vessel 120. A contour shape of the heating assembly 140 matches a contour shape of the cookware vessel 120.

In the above embodiment, by arranging the heating assembly 140 of an annular structure and surrounding the cookware vessel 120, in the process of rotating and heating the cookware vessel 120, an area of the cookware vessel 120 that currently rotates away from the heating assembly 140 is able to continue to correspond to the heating assembly 140 and be heated after rotating by 180 degrees, such that a rapid temperature drop of the area of the cookware vessel 120 due to a long heat exchange time with air is avoided. Therefore, it is guaranteed that the heating area of the cookware vessel 120 is able to constantly maintain a certain temperature, improving the heating uniformity of the cookware vessel 120 and further improving the cooking effect of dishes.

In the above embodiment, the contour shape of the heating assembly 140 matches the contour shape of the cookware vessel 120, such that it is able to be guaranteed that a distance between each position of the heating assembly 140 and the cookware vessel 120 is the same, so as to better guarantee the heating uniformity of the cookware vessel 120.

In the embodiment of the present invention, with reference to Fig. 14, the heating assembly 140 is obliquely arranged relative to the axis of the cookware vessel 120. An end of the heating assembly 140 away from a mouth of the cookware vessel 120 extends to a bottom area or a bottom edge of the cookware vessel 120.

In the above embodiment, the heating assembly 140 is obliquely arranged relative to the axis of the cookware vessel 120, such that the heating assembly 140 has different heights in the axial direction of the cookware vessel 120 along a circumferential direction of the cookware vessel 120. Moreover, by extending the end of the heating assembly 140 away from the mouth of the cookware vessel 120 to the bottom area or the bottom edge of the cookware vessel 120, when the cookware vessel 120 rotates to be heated, the heating area formed by the heating assembly 140 on the cookware vessel 120 is able to cover from a mouth end to the bottom area or the bottom edge of the cookware vessel 120, such that the heating area on the cookware vessel 120 is increased, making wok hei in the cookware vessel 120 sufficient, and further improving a cooking effect of dishes.

In the embodiment of the present invention, with reference to Fig. 14, an included angle a is formed between the axis of the heating assembly 140 and the axis of the cookware vessel 120. The included angle α is 10°-45°, such that when the cookware vessel 120 rotates to be heated, the heating area formed by the heating assembly 140 on the cookware vessel 120 is able to cover two thirds or more of the area of the cookware vessel 120, the wok hei in the cookware vessel 120 is sufficient, and the cooking effect of dishes is further improved.

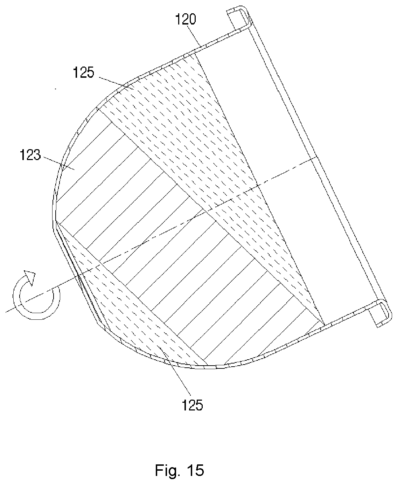

It can be understood that with reference to Fig. 15, when the cookware vessel 120 is stationary, the heating assembly 140 generates an inclined annular higher temperature area 123 on the cookware vessel 120. When the cookware vessel 120 rotates to be heated, the heating assembly 140 generates a higher temperature zone 125 on the surface of the cookware vessel 120. Moreover, the higher temperature zone 125 is able to cover two thirds or more of the surface of the cookware vessel 120, and theoretically, the entire area is able to be covered. Furthermore, the temperature in the higher temperature area 123 is balanced in the circumferential direction of the cookware vessel 120. The temperature in the axial direction of the cookware vessel 120 is also balanced in a process of rotating and heating the cookware vessel 120, such that uniform heating is able to be satisfied no matter in the circumferential direction of the cookware vessel 120 or in the axial direction of the cookware vessel 120, sufficient wok hei in the cookware vessel 120 is guaranteed, and the cooking effect of dishes is further improved.

In the embodiment of the present invention, with reference to Fig. 14, the heating assembly 140 includes a coil panel 141. Each coil panel 141 of the at least one coil panel 141 is provided with a plurality of first heat dissipation holes 21 arranged at intervals along a circumferential direction of the coil panel 141. An extending direction of each first heat dissipation hole 21 of the plurality of first heat dissipation holes 21 is perpendicular to a winding direction of the coil panel 141.

In the above embodiment, the first heat dissipation holes 21 are configured to dissipate heat for the coil panel 141, so as to guarantee normal operation of the coil panel 141. Specifically, the plurality of first heat dissipation holes 21 may be evenly arranged along a circumferential direction of the coil panel 141, so as to improve heat dissipation uniformity of the first heat dissipation holes 21 to the coil panel 141. Moreover, the extending direction of the first heat dissipation holes 21 is perpendicular to the winding direction of the coil panel 141, such that overall strength of the coil panel 141 is guaranteed.

In the embodiment of the present invention, at least two winding layers of each coil panel 141 of the at least one coil panel 141 may be provided, so as to guarantee that the coil panel 141 with a limited area is able to have enough coil turns, and then the coil panel 141 is able to match inductance, and further achieve heating power required by the coil panel 141.

It should be noted that a winding height of the coil panel 141 is able to be determined according to a shape size of the cookware vessel 120 and a planned heating area. In an embodiment, in a case that the size of the cookware vessel 120 is large and the planned heating area is large, the winding height of the coil panel 141 is able to be greater, and conversely, the winding height of the coil panel 141 is able to be smaller.

In the embodiment of the present invention, with reference to Fig. 14, the cooking device 100 further includes a first bracket 3. The first bracket 3 is arranged on an outer side of the heating assembly 140, and the first bracket 3 is provided with at least one magnet 31.

In the above embodiment, the first bracket 3 is provided with the magnet 31, and the first bracket 3 is arranged on an outer side of the heating assembly 140, such that magnetic induction lines scattered in the air may be reduced, so as to reduce magnetic leakage of a coil. Therefore, the magnetic induction lines are distributed on one side of the cookware vessel 120 as much as possible, and it is guaranteed that the coil panel 141 is able to reach the required heating power.

The first bracket 3 may have various structural forms, as long as it is able to be fixed to the outer side of the heating assembly 140 and allows the magnet 31 to be mounted. In the embodiment of the present invention, with reference to Fig. 14, the first bracket 3 may be of an annular shape and is arranged coaxial with the heating assembly 140, and a contour shape of the first bracket 3 matches the contour shape of the heating assembly 140. When a plurality of magnets 31 are provided, the plurality of magnets 31 are arranged at intervals along a circumferential direction of the first bracket 3.

In the above embodiment, the contour shape of the first bracket 3 of the annular shape matches that of the heating assembly 140, and the first bracket is arranged coaxial with the heating assembly 140, such that the distance between each magnet 31 and the coil panel 141 is short, so as to reduce magnetic leakage. Moreover, the plurality of magnets 31 is able to be evenly arranged along a circumferential direction of the first bracket 3, and the distance between two adjacent magnets 31 is able to be short, so as to reduce magnetic leakage.

In the above embodiment, the first bracket 3 may be formed by connecting a plurality of annular spacer bars arranged at intervals, and the plurality of magnets 31 are uniformly fixed on the spacer bars, so as to guarantee the overall strength of the first bracket 3. Moreover, the first bracket 3 may be fixed to the coil panel 141 by a connecting member such as a slot and/or a screw.

In the embodiment of the present invention, with reference to Fig. 14, the cooking device 100 further includes a second bracket 4 arranged on an outer side of the cookware vessel 120. The heating assembly 140 is arranged on the second bracket 4. A second heat dissipation hole 41 is arranged on the second bracket 4. A gap is formed between the second bracket 4 and the cookware vessel 120.

In the above embodiment, the heating assembly 140 is arranged on the second bracket 4 by arranging the second bracket 4, such that the heating assembly 140 is able to be stably mounted on an outer side of the cookware vessel 120, then the heating assembly 140 is able to conveniently heat the cookware vessel 120. Moreover, the heating assembly 140 and the cookware vessel 120 is able to conveniently dissipate heat through the second heat dissipation hole 41 by arranging the second heat dissipation hole 41 on the second bracket 4.

In the above embodiment, the second bracket 4 is made of a non-magnetic conductive material to avoid shielding a magnetic field, such that it is guaranteed that the heating assembly 140, that is, the coil panel 141, only heats the cookware vessel 120, and a heating effect of the cookware vessel 120 is guaranteed. Specifically, the second bracket 4 is able to be made of engineering plastic, or nylon and glass fiber.

In the above embodiment, the gap is provided between the second bracket 4 and the cookware vessel 120, such that a certain distance is able to be provided between the coil panel 141 and the cookware vessel 120. The distance influences on-load inductance of the coil panel 141 and heat dissipation of an outer surface of the cookware vessel 120. In an embodiment, in a case that the distance is reduced, the on-load inductance of the coil panel 141 is reduced, and then heating power of the coil panel 141 is reduced, which is unfavorable to the heat dissipation of the outer surface of the cookware vessel 120. Typically, the distance is greater than 15 mm, which is able to guarantee the on-load inductance of the coil panel 141 and facilitate the heat dissipation of the outer surface of the cookware vessel 120.

The second bracket 4 may have various structural forms, as long as the heating assembly 140 is able to be mounted and fixed to an outer side of the cookware vessel 120 without rotating with the cookware vessel 120. In the embodiment of the present invention, with reference to Fig. 1, the second bracket 4 is a cylindrical structure with two open ends, the second bracket 4 sleeves an outside of the cookware vessel 120, and a contour shape of the second bracket 4 matches the contour shape of the cookware vessel 120.

According to the above embodiment, since the contour shape of the heating assembly 140 matches the contour shape of the cookware vessel 120, by configuring the contour shape of the second bracket 4 matching the contour shape of the cookware vessel 120, the heating assembly 140 is able to be conveniently mounted on the second bracket 4, and mounting stability of the heating assembly 140 on the second bracket 4 is able to also be guaranteed.

In the description of the present invention, the term "a plurality of" means two or more. Unless otherwise specifically limited, the terms "upper", "lower", etc. indicate azimuthal or positional relations based on those shown in the drawings only for ease of description of the present invention and for simplicity of description, are not intended to indicate or imply that the referenced device or element must have a particular orientation and be constructed and operated in a particular orientation, and thus cannot be construed as a limitation on the present invention. The terms "connect", "mount", "fix", etc. are to be construed in a broad sense. In an embodiment, "connect" includes a fixed connection, a detachable connection, or an integral connection, and may also include a direct connection, or an indirect connection by means of an intermediate medium. For those of ordinary skill in the art, the specific meanings of the above terms in the present invention could be understood according to specific circumstances.

In the description of the present invention, the description of the terms "an embodiment", "some embodiments", "a particular embodiment", etc. means that the particular features, structures, materials, or characteristics described with reference to the embodiment or instance are included in at least one embodiment or instance of the present invention. In the present invention, the schematic descriptions of the above terms do not necessarily refer to the same embodiment or instance. Moreover, the specific features, structures, materials, or characteristics described may be combined in any suitable way in any one or more embodiments or instances.

What are described above are merely preferred embodiments of the present invention and not intended to limit the present invention, and various changes and modifications may be made to the present invention by those skilled in the art. Any modifications, equivalent substitutions, improvements, etc. within the spirit and principles of the present invention are intended to fall within the scope of protection of the present invention.

## Claims

1. A cooking device, comprising:
a base;
a cookware vessel (120), the cookware vessel (120) is rotatably arranged in the base; and
at least one temperature measuring assembly (130), the at least one temperature measuring assembly (130) is arranged on the base, and the at least one temperature measuring assembly (130) comprises a first temperature measuring assembly (137), and the first temperature measuring assembly (137) is arranged opposite an ingredient area of the cookware vessel (120);
when the cooking device (100) is in a cooking position, an area where an ingredient in the cookware vessel (120) makes contact with the cookware vessel (120) is the ingredient area.

2. The cooking device as claimed in claim 1, wherein the base comprises:
a housing (110) and a heating assembly (140) arranged in the housing (110), and the heating assembly (140) is located between the housing (110) and the cookware vessel (120) and configured for heating the cookware vessel (120);
the heating assembly (140) comprises at least one coil panel (141), and the at least one coil panel (141) comprises an annular structure and/or an arc-shaped structure.

3. The cooking device as claimed in claim 2, wherein
the temperature measuring assembly (130) is arranged opposite a central area of the heating assembly (140); and/or
the temperature measuring assembly (130) is arranged opposite a higher temperature area (123) of the cookware vessel (120), and when the cooking device (100) is in the cooking position, an area of the cookware vessel (120) opposite the heating assembly (140) during rotation relative to the housing (110) is the higher temperature area (123).

4. The cooking device as claimed in claim 2, wherein at least one part and at least another part of the heating assembly (140) are located at two sides of an axis of the cookware vessel (120) respectively; and the heating assembly (140) has different heights in an axial direction of the cookware vessel (120) along a circumferential direction of the cookware vessel (120).

5. The cooking device as claimed in claim 4, wherein
the heating assembly (140) is of an annular shape and sleeves an outside of the cookware vessel (120), and a contour shape of the heating assembly (140) matches a contour shape of the cookware vessel (120).

6. The cooking device as claimed in claim 4, wherein
the heating assembly (140) is obliquely arranged relative to the axis of the cookware vessel (120); and
an end of the heating assembly (140) away from a mouth of the cookware vessel (120) extends to a bottom area or a bottom edge of the cookware vessel (120).

7. The cooking device as claimed in claim 4, wherein
an included angle is formed between an axis of the heating assembly (140) and the axis of the cookware vessel (120), and the included angle is 10°-45°.

8. The cooking device as claimed in claim 5, wherein
each coil panel (141) of the at least one coil panel (141) is provided with a plurality of first heat dissipation holes (21) arranged at intervals along a circumferential direction of the coil panel (141);
an extending direction of each first heat dissipation hole (21) of the plurality of first heat dissipation holes (21) is perpendicular to a winding direction of the coil panel (141); and
at least two winding layers of each coil panel (141) of the at least one coil panel (141) are provided.

9. The cooking device as claimed in claim 5, wherein the cooking device (100) further comprises:
a first bracket (3), and the first bracket (3) is arranged on an outer side of the heating assembly (140), and the first bracket (3) is provided with at least one magnet (31);
the first bracket (3) is of an annular shape and is arranged coaxial with the heating assembly (140), and a contour shape of the first bracket (3) matches the contour shape of the heating assembly (140); and
when a plurality of magnets (31) are provided, the plurality of magnets (31) are arranged at intervals along a circumferential direction of the first bracket (3).

10. The cooking device as claimed in claim 1, wherein
an outer wall of the cookware vessel (120) is provided with an infrared radiation coating (121), and the infrared radiation coating (121) at least covers a measuring area (122) of the cookware vessel (120); and
an area where the cookware vessel (120) is irradiated by the temperature measuring assembly (130) when the cooking device (100) is in the cooking position is set as the measuring area (122).

11. The cooking device as claimed in claim 2, wherein
the housing (110) is provided with a measuring port (111);
the temperature measuring assembly (130) penetrates the measuring port (111), and the temperature measuring assembly (130) is detachably connected to the housing (110); and
the temperature measuring assembly (130) comprises:
a magnetic shielding ring (132), and the magnetic shielding ring (132) is inserted in the measuring port (111) and connected to the housing (110); and
an infrared temperature measuring sensor (133) that is detachably connected to the housing (110), and the infrared temperature measuring sensor (133) comprises a measuring window (131), and the measuring window (131) is located in the magnetic shielding ring (132).

12. The cooking device as claimed in claim 11, wherein
the magnetic shielding ring (132) comprises a first end surface (135) and a second end surface (136) that are oppositely arranged, the second end surface (136) is located outside the housing (110), an intersection of a radiation range of the temperature measuring assembly (130) and a plane where the first end surface (135) is located is a first area, and the first area is located in an opening of the first end surface (135).
